(19) Europäisches Patentamt
European Patent Office
Office européen des brevets

(11) **EP 4 556 520 A1**

(12) **EUROPEAN PATENT APPLICATION**
published in accordance with Art. 153(4) EPC

(43) Date of publication:
**21.05.2025 Bulletin 2025/21**

(21) Application number: **24803779.8**

(22) Date of filing: **10.05.2024**

(51) International Patent Classification (IPC):
***C08K 5/09*** *(2006.01)* ***C08K 5/098*** *(2006.01)*
***C08K 5/29*** *(2006.01)* ***C08L 69/00*** *(2006.01)*
***C08G 64/34*** *(2006.01)* ***C08G 65/26*** *(2006.01)*

(52) Cooperative Patent Classification (CPC):
**C08G 64/34; C08G 65/26; C08K 5/09; C08K 5/098; C08K 5/29; C08L 69/00**

(86) International application number:
**PCT/KR2024/006387**

(87) International publication number:
**WO 2024/232726 (14.11.2024 Gazette 2024/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.05.2023 KR 20230060435**

(71) Applicant: **LG Chem, Ltd.**
**Yeongdeungpo-gu**
**Seoul 07336 (KR)**

(72) Inventors:
- **SHIN, Bo Ra**
  **Daejeon 34122 (KR)**
- **BANG, So Hee**
  **Daejeon 34122 (KR)**
- **AHN, Min Ji**
  **Daejeon 34122 (KR)**
- **KIM, Sang Woo**
  **Daejeon 34122 (KR)**
- **LIM, Seo Yeon**
  **Daejeon 34122 (KR)**

(74) Representative: **Plasseraud IP**
**104 Rue de Richelieu**
**CS92104**
**75080 Paris Cedex 02 (FR)**

# (54) POLYALKYLENE CARBONATE RESIN COMPOSITION AND PREPARATION METHOD THEREFOR

(57) The present invention relates to a polyalkylenecarbonate resin composition with excellent thermal stability and a method for preparing the same. The polyalkylenecarbonate resin composition includes polyalkylenecarbonate, an organic acid, and at least one additive selected from an anti-oxidant and a hydrolysis inhibitor. The organic acid is included in an amount of 0.001 parts by weight or more and less than 0.5 parts by weight with respect to 100 parts by weight of the polyalkylenecarbonate.

[FIG. 1]

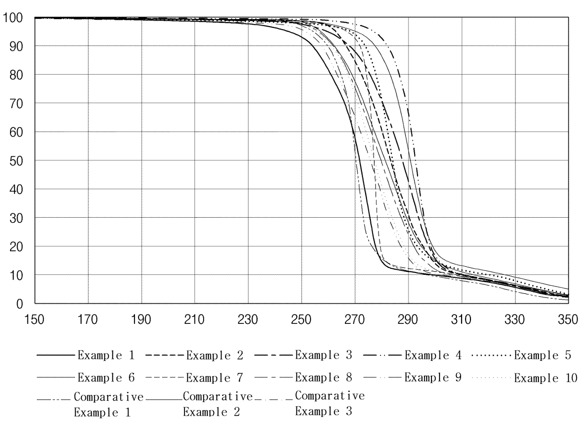


EP 4 556 520 A1

## Description

## TECHNICAL FIELD

Cross-reference to Related Applications

This application claims the benefit of Korean Patent Application No. 10-2023-0060435, filed on May 10, 2023, in the Korean Intellectual Property Office, the disclosure of which is incorporated herein in its entirety by reference.

Technical Field

The present invention relates to a polyalkylenecarbonate resin composition with excellent thermal stability and a method for preparing the same.

## BACKGROUND ART

Since the Industrial Revolution, humankind has built a modern society by consuming a large amount of fossil fuel, but environmental destruction such as deforestation is increasing a concentration of carbon dioxide in the atmosphere. Since increase of the concentration of carbon dioxide is a cause of increasing a greenhouse effect, it is important to reduce the concentration of carbon dioxide, in the atmosphere, having a high contribution to global warming, and various studies are being conducted on carbon dioxide emission regulation, fixation, or the like.

Recently, a polyalkylenecarbonate resin obtained by polymerizing carbon dioxide and epoxide is attracting great attention as one of biodecomposable resins. In particular, a process of preparing the polyalkylenecarbonate resin using carbon dioxide may fix an amount of carbon dioxide in the atmosphere to reduce a global warming problem, and is also actively studied due to the perspective that carbon dioxide is utilized as a carbon resource.

However, since the polyalkylenecarbonate resin is thermally decomposed at a temperature equal to or more than 180°C due to low thermal stability thereof, there is a significant limitation in industrial application.

In addition, not only carbon dioxide and epoxide but also a catalyst are needed so as to prepare the polyalkylenecarbonate resin, and thus a zinc dicarboxylate-based catalyst such as a zinc glutarate catalyst combined with dicarboxylic acid, and a double metal cyanide catalyst composed of a complex of Co, Zn, Al, etc., is used as a typical heterogeneous catalyst.

When such catalysts remain in the resin, polymer chain decomposition is accelerated in a heat treatment process of the resin to be a cause of degrading thermal stability of the polyalkylenecarbonate resin, and thus development of various purification techniques of removing the catalyst after completion of polymerization is required.

For example, CN 103842406 B discloses a method for preparing polyalkylenecarbonate in which the polyalkylenecarbonate is prepared in an organic solvent in the presence of the catalyst, the organic solvent is removed, a polyalkylenecarbonate granule is formed, and then an aqueous acid solution containing 0.01 to 5 wt% acid without the organic solvent is added to the polyalkylenecarbonate granule, followed by solid-liquid mixing, heat treatment and drying. However, there are problems that since in the method of solid-liquid mixing through adding the aqueous acid solution, the polyalkylenecarbonate is present in a form of a granule (solid) in the aqueous acid solution, the catalyst remaining in the polyalkylenecarbonate has low inactivation efficiency, and a large amount of acid is needed.

[Prior Art]

[Patent]

(Patent 1) CN 103842406 B (November 02, 2016)

## DISCLOSURE OF THE INVENTION

## TECHNICAL PROBLEM

An aspect of the present invention provides a polyalkylenecarbonate resin composition with excellent thermal stability.

An aspect of the present invention also provides a method for preparing the polyalkylenecarbonate resin composition.

**TECHNICAL SOLUTION**

According to an aspect of the present invention, there is provided a polyalkylenecarbonate resin composition and a method for preparing the same.

(1) The present invention provides a polyalkylenecarbonate resin composition including polyalkylenecarbonate, an organic acid, and at least one additive selected from an anti-oxidant and a hydrolysis inhibitor, wherein the organic acid is included in an amount of 0.001 parts by weight or more and less than 0.5 parts by weight with respect to 100 parts by weight of the polyalkylenecarbonate.
(2) In (1) above, the organic acid is included in an amount of 0.05 parts by weight to 0.1 parts by weight with respect to 100 parts by weight of the polyalkylenecarbonate.
(3) In (1) or (2) above, the organic acid is at least any one selected from citric acid, tartaric acid, ascorbic acid, and maleic acid.
(4) In any one among (1) to (3) above, at least one additive selected from an anti-oxidant and a hydrolysis inhibitor is included in an amount of 0.01 parts by weight to 3.00 parts by weight with respect to 100 parts by weight of the polyalkylenecarbonate.
(5) In any one among (1) to (4) above, the anti-oxidant is at least any one selected from tetrakis[methylene-3-(3,5-di-t-butyl-4-hydroxyphenyl)propionate]methane, triethyleneglycol-bis-3-(3-t-butyl-4-hydroxy-5-methylphenyl)propionate, thiodiethylenebis[3-(3,5-di-t-butyl-4-hydroxyphenyl)propionate], 1,2-bis(3,5-di-t-Butyl-4-hydroxyhydrocinnamoyl)hydrazine, octadecyl 3-(3,5-di-t-butyl-4-hydroxyphenyl)propionate, 1,3,5-tris(4-t-butyl-3-hydroxy-2,6-dimethylbenzyl)-1,3,5-triazine-2,4,6-(1H,3H,5H)-trione, 2,4-di-t-pentyl-6-1-(3,5-di-t-pentyl-2-hydroxyphenyl)ethyl) phenylacrylate, 1,3,5-trimethyl-2,4,6-tris(3,5-di-t-butyl-4-hydroxybenzyl)benzene, α-tocopherol, 2,6-di-t-butyl-p-cresol.
(6) In any one among (1) to (5) above, the hydrolysis inhibitor is a carbodiimide-based compound.
(7) In any one among (1) to (6) above, the polyalkylenecarbonate resin composition further includes a fatty acid metal salt having a carbon number of 13 to 21.
(8) In any one among (1) to (7) above, the polyalkylenecarbonate resin composition further includes 0.001 parts by weight to 3.000 parts by weight of a fatty acid metal salt having a carbon number of 13 to 21.
(9) In any one among (1) to (8) above, a molecular weight change rate defined by Equation 1 below is equal to or less than 35%.

[Equation 1]

$$\text{Molecular weight change rate (\%)} = (|M_{W1} - M_{W2}| / M_{W1}) \times 100$$

In Equation 1, $M_{W1}$ is a weight average molecular weight of the polyalkylenecarbonate resin composition before heat treatment measured by gel chromatography, and $M_{W2}$ is a weight average molecular weight of the polyalkylenecarbonate resin composition after heat treatment at 180°C for 20 minutes measured by gel chromatography.
(10) In any one among (1) to (9) above, the polyalkylenecarbonate includes a repeating unit represented by Formula 1 below, and a repeating unit represented by Formula 2 below.

[Formula 1]

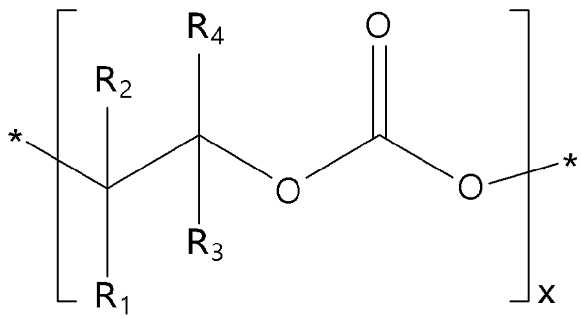

[Formula 2]

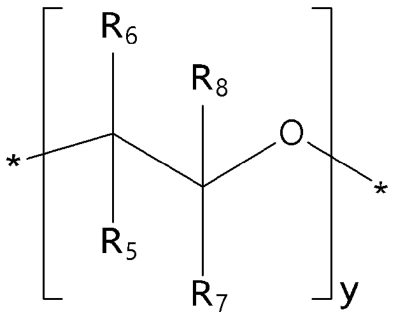

In Formulae 1 and 2, $R_1$ to $R_8$ are each independently hydrogen, a linear alkyl group having a carbon number of 1 to 20, a branched alkyl group having a carbon number of 3 to 20, an aryl group having a carbon number of 6 to 20, an alkenyl group having a carbon number of 2 to 20, or a cycloalkyl group having a carbon number of 3 to 20, * means a connection site between repeating units, x and y are mole fractions, x is 0.70 to 1.00, y is 0.00 to 0.30, and x+y is 1.

(11) In any one among (1) to (10) above, the polyalkylenecarbonate has a glass transition temperature of - 10°C to 50°C.

(12) In any one among (1) to (11) above, the polyalkylenecarbonate is at least any one selected from the group consisting of polyethylenecarbonate, polypropylenecarbonate, polypentenecarbonate, polyhexenecarbonate, polyoctenecarbonate and polycyclohexenecarbonate.

(13) In any one among (1) to (12) above, the polyalkylenecarbonate has a cyclic carbonate content of 0.5% by weight to 15% by weight.

(14) The present invention provides a method for preparing a polyalkylenecarbonate resin composition according to any one among (1) to (13) above including a step (S1) of preparing a polymer including polyalkylenecarbonate by polymerizing an alkylene oxide compound and carbon dioxide in a solvent in the presence of a catalyst, a step (S2) of adding, to the polymer, at least one additive selected from an organic acid, an anti-oxidant, and a hydrolysis inhibitor, and agitating, and a step (S3) of removing the solvent, wherein the organic acid is added in an amount equal to or more than 0.001 parts by weight and less than 0.5 parts by weight with respect to 100 parts by weight of a polyalkylene carbonate solid content in the polymer.

(15) In (14) above, before adding the organic acid, a solvent is additionally added to the polymer such that a polyalkylenecarbonate solid content in the polymer is 10% by weight to 40% by weight.

(16) In (14) and (15) above, the polymerization is performed in a temperature range of 30°C to 120°C.

(17) In any one among (14) to (16), in the step (S2), a fatty acid metal salt having a carbon number of 13 to 21 is further added to the polymer.

(18) In any one among (14) to (17) above, the catalyst includes a double metal cyanide compound and a complexing agent.

(19) In (18) above, the complexing agent is at least any one selected from the group consisting of cyclobutanol, cyclopentanol, cyclohexanol, cycloheptanol, cyclooctanol, 1-methyl cyclopentanol, 2-methyl cyclopentanol, 3-methyl cyclopentanol, 1-ethyl cyclopentanol, 2-ethyl cyclopentanol, 3-ethyl cyclopentanol, 1-propyl cyclopentanol, 2-propyl cyclopentanol, 3-propyl cyclopentanol, 1-butyl cyclopentanol, 2-butyl cyclopentanol, 3-butyl cyclopentanol, 1-isopropyl cyclopentanol, 2-isopropyl cyclopentanol, 3-isopropyl cyclopentanol, 1-(propan-2-yl) cyclopentanol, 2,2-dimethyl cyclopentanol, 2,3-dimethyl cyclopentanol, 3,3-dimethyl cyclopentanol, 1,2-dimethyl cyclopentanol, 1,3-dimethyl cyclopentanol, 1-methyl cyclohexanol, 1-ethyl cyclohexanol, 1-propyl cyclohexanol, 1-butyl cyclohexanol, 2-methyl-1-cyclohexanol, 2-ethyl-1-cyclohexanol, 3-ethyl-1-cyclohexanol, 4-ethyl-1-cyclohexanol, 2-propy-1-cyclohexanol, 3-propyl-1-cyclohexanol, 4-propyl-1-cyclohexanol, 2-butyl-1-cyclohexanol, 3-butyl-1-cyclohexanol, 4-butyl-1-cyclohexanol, 2-isopropyl-1-cyclohexanol, 3-isopropyl-1-cyclohexanol, 4-isopropyl-1-cyclohexanol, 2-tert-butyl-1-cyclohexanol, 3-tert-butyl-1-cyclohexanol, 4-tert-butyl-1-cyclohexanol, 2,3-dimethyl-1-cyclohexanol, 2,4-dimethyl-1-cyclohexanol, 3,4-dimethyl-1-cyclohexanol, 1-methyl cycloheptanol, 2-methyl cycloheptanol, 3-methyl cycloheptanol, and 4-methyl cycloheptanol.

## ADVANTAGEOUS EFFECTS

Since a polyalkylenecarbonate resin composition includes an organic acid equal to or more than 0.001 parts by weight and less than 0.5 parts by weight with respect to 100 parts by weight of polyalkylenecarbonate, and includes an antioxidant and/or a hydrolysis inhibitor, there is an effect that thermal stability is improved by increasing a thermal decomposition temperature.

## BRIEF DESCRIPTION OF THE DRAWINGS

The following drawings attached to the specification illustrate preferred examples of the present invention by example, and serve to enable technical concepts of the present invention to be further understood together with detailed description of the invention given below, and therefore the present invention should not be interpreted only with matters in such drawings:
FIG. 1 is a graph of mass change analysis results, through a thermogravimetric analyzer, of polyethylenecarbonate resin compositions prepared in Examples and Comparative Examples.

## MODE FOR CARRYING OUT THE INVENTION

Hereinafter, the present invention will be described in more detail to help understand the present invention.
It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

### Definition of Terms

In the present specification, the term "alkyl group" may mean a monovalent aliphatic saturated hydrocarbon.
In the present specification, the term "aryl group" may mean a cyclic aromatic hydrocarbon, and may mean all of a monocyclic aromatic hydrocarbon in which one ring is formed, or a polycyclic aromatic hydrocarbon in which two or more rings are bonded to each other.
In the present specification, the term "alkenyl group" may mean a monovalent unsaturated aliphatic hydrocarbon including one or at least two double bonds.
In the present specification, the term "cycloalkyl group" may mean all of a cyclic saturated hydrocarbon, or a cyclic unsaturated hydrocarbon including one or at least two unsaturated bonds.

### Measurement Method

In the present specification, molecular weight characteristics are analyzed by gel permeation chromatography (GPC) using polystyrene as a standard material, and are specifically measured using GPC (a Waters 1515 isocratic HPLC pump, a Waters 2414 refractive index detector, Waters Inc.) under the following conditions.

Column: Two Agilent PLgel MIXED-B (7.5 mmx300, 10 μm)
Solvent: Chloroform
Flux: 0.7 ml/min
Column temperature: 40°C
Sample: Chloroform of 4.0 mg/1.0 ml
Sample injection volume: 20 μl
Standard material: polystyrene

In the present specification, mass change analysis is measured using a thermogravimetric analyzer (TGA), and is specifically measured using the thermogravimetric analyzer (TGA2, Mettler Toledo) under the following conditions.

1) first step: increasing a temperature from 30°C to 150°C (10°C/min)
2) second step: maintaining at 150°C for 5 minutes
3) third step: reducing a temperature from 150°C to 30°C (10°C/min)
4) fourth step: maintaining at 30°C for 5 minutes
5) fifth step: increasing a temperature from 30°C to 400°C (10°C/min)

### Polyalkylenecarbonate Resin Composition

The present invention provides a polyalkylenecarbonate resin composition with improved thermal stability by suppressing thermal decomposition.
The polyalkylenecarbonate resin composition according to an embodiment of the present invention is characterized by including polyalkylenecarbonate, an organic acid, and at least one additive selected from an anti-oxidant and

a hydrolysis inhibitor, wherein the organic acid is included in an amount equal to or more than 0.001 parts by weight and less than 0.5 parts by weight with respect to 100 parts by weight of the polyalkylenecarbonate.

A polyalkylenecarbonate resin is prepared using carbon dioxide as a resource, and is attracting great attention as a boidecomposable resin, but is thermally decomposed at a temperature of at least 180°C due to low thermal stability thereof, and there is a significant limitation in industrial application. In addition, not only carbon dioxide and epoxide but also a catalyst are needed so as to prepare the polyalkylenecarbonate resin, and when such a catalyst remains in the resin, polymer chain decomposition is accelerated in a heat treatment process of the resin to be a cause of degrading thermal stability of the polyalkylenecarbonate resin, and thus development of various purification techniques of removing the catalyst after completion of polymerization is required.

However, in the polyalkylenecarbonate resin composition according to an embodiment of the present invention, after polymerization of the polyalkylenecarbonate, at least one additive of an organic acid, an anti-oxidant, and a hydrolysis inhibitor respectively having specific amounts may directly add, to a polyalkylenecarbonate polymer may be directly added to the polymer to inactivate the remaining catalyst without any additional process such as extraction or precipitation, and thermal decomposition is suppressed, thereby being capable of having excellent thermal stability.

Hereinafter, the polyalkylenecarbonate resin composition will be more specifically described by being divided into components included therein.

*Polyalkylenecarbonate*

According to the present invention, the polyalkylenecarbonate may include a repeating unit represented by Formula 1 below and a repeating unit represented by Formula 2 below, as a polymer prepared by polymerizing an alkylene oxide compound and carbon dioxide.

[Formula 1]

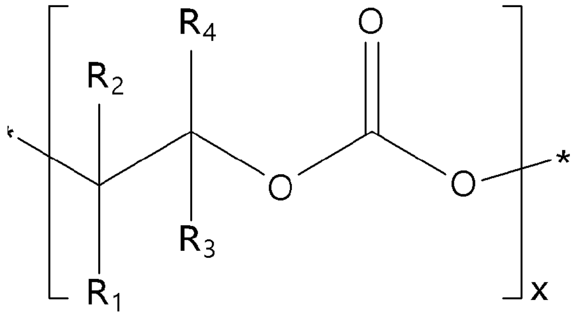

[Formula 2]

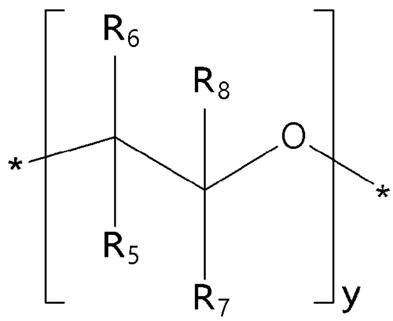

In Formula 1 and Formula 2 above,
$R_1$ to $R_8$ are each independently hydrogen, a linear alkyl group having a carbon number of 1 to 20, a branched alkyl group having a carbon number of 3 to 20, an aryl group having a carbon number of 6 to 20, an alkenyl group having a carbon number of 2 to 20, or a cycloalkyl group having a carbon number of 3 to 20, * means a connection site between repeating units, x and y are mole fractions, x is 0.70 to 1.00, y is 0.00 to 0.30, and x+y is 1.

In addition, the x may be 0.80 to 1.00, the y may be 0.00 to 0.20, and preferably the x may be 0.90 to 1.00, and the y

may be 0.00 to 0.10. When the ranges are satisfied, a fixation ratio of carbon dioxide is high to be effective in reduction of green-house gas, and to be advantageous in biodecomposition characteristics. In addition, when the polyalkylenecarbonate according to the present invention is prepared as a film, the film shows low oxygen permeability to exhibit excellent barrier characteristics.

The polyalkylenecarbonate may be at least any one selected from the group consisting of polyethylenecarbonate, polypropylenecarbonate, polypentenecarbonate, polyhexenecarbonate, polyoctenecarbonate and polycyclohexenecarbonate. In addition, in Formula 1 above, $R_1$ to $R_8$ are each independently hydrogen, a linear alkyl group having a carbon number of 1 to 20, a branched alkyl group having a carbon number of 3 to 20, an aryl group having a carbon number of 6 to 20, an alkenyl group having a carbon number of 2 to 20, or a cycloalkyl group having a carbon number of 3 to 20, and a proper functional group may be selected considering final physical properties of the resin to be obtained.

In addition, the repeating unit represented by Formula 1 above may be represented by Formula 3 below.

[Formula 3]

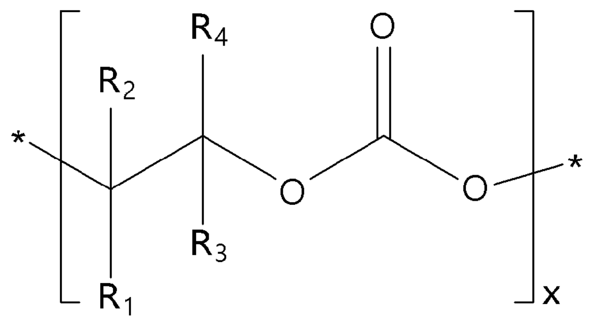

In Formula 3 above, $R_1$ to $R_4$ are each independently hydrogen, or a linear alkyl group having a carbon number of 1 to 10, and x and * are the same as defined in Formula 1 above.

More specifically, the repeating unit represented by Formula 1 above may be represented by Formula 4 or Formula 5 below.

[Formula 4]

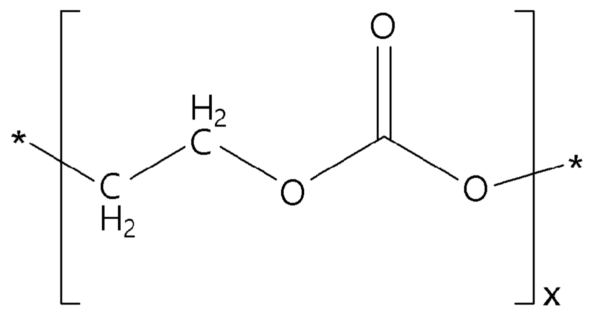

[Formula 5]

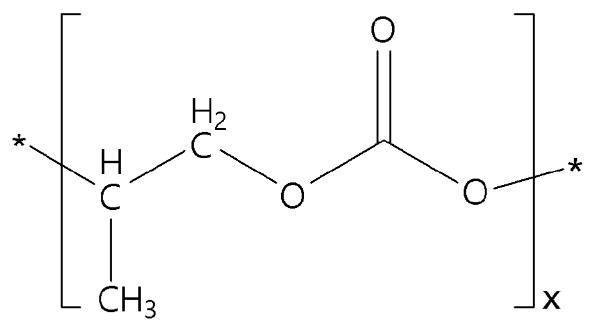

In Formulae 4 and 5 above, x and * are the same as defined in Formula 1 above.

In addition, the repeating unit represented by Formula 2 above may be represented by Formula 6 below.

[Formula 6]

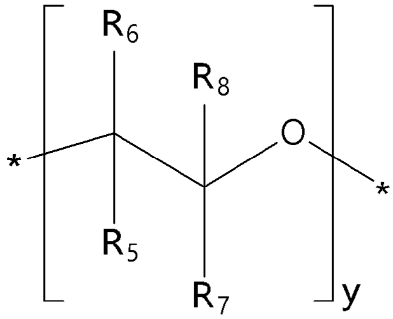

In Formula 6 above, $R_5$ to $R_8$ are each independently hydrogen or a linear alkyl group having a carbon number of 1 to 10, and y and * are the same as defined in Formula 2 above.

More specifically, the repeating unit represented by Formula 2 above may be represented by Formula 7 or Formula 8 below.

[Formula 7]

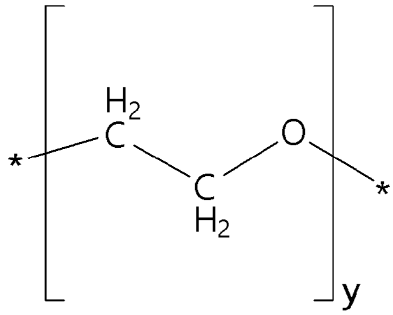

[Formula 8]

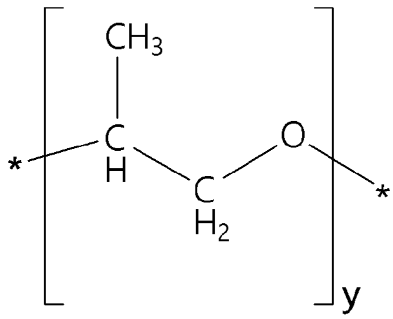

In Formulae 7 and 8 above, y and * are the same as defined in Formula 2 above.

The polyalkylenecarbonate according to the present invention has a glass transition temperature (Tg) of -10°C to 50°C, 0°C to 50°C, or 10°C to 50°C. When the range is satisfied, the polyalkylenecarbonate may have excellent processability at the room temperature.

According to another embodiment, when $R_1$ to $R_8$ are each independently hydrogen in Formulae 1 and 2 above, the polyalkylenecarbonate may have a glass transition temperature (Tg) of 0°C to 20°C.

According to another embodiment, when $R_1$ to $R_8$ are each independently a linear alkyl group having a carbon

number of 1 to 20, a branched alkyl group having a carbon number of 3 to 20, an aryl group having a carbon number of 6 to 20, an alkenyl group having a carbon number of 2 to 20, or a cycloalkyl group having a carbon number of 3 to 20 in Formulae 1 and 2 above, the polyalkylenecarbonate may have a glass transition temperature (Tg) of 30°C to 50°C, or 35°C to 50°C.

In addition, a cyclic carbonate content with respect to the total weight of the polyalkylenecarbonate according to the present invention may be 0.5 wt% to 15.0 wt%, 0.5 wt% to 10.0 wt%, or 0.5 wt% to 5.0 wt%. When the range is satisfied, a problem of glass transition temperature decrease caused by the cyclic carbonate acting as a softener may be minimized to exhibit an excellent mechanical property.

The cyclic carbonate content may be measured by dissolving 10 mg of a polyalkylenecarbonate resin sample in a chloroform-d6 solvent using a 1H-NMR spectrometer (a 500 MHz spectrometer, Jeol Inc.). Specifically, a peak appears around 4.5 ppm, which is a cyclic carbonate peak, from a result measured in the 1H-NMR spectrometer, and thus the cyclic carbonate content may be calculated as shown in Equation 2 below using a carbonate peak area and an ether peak area.

[Equation 2]

$$(A/N)/\{(A/N) + [(B+C)/(1-CO_2\ content)]\}$$

In Equation 2 above, A, B, C, N, and a $CO_2$ content may be defined as follows.

A is a cyclic carbonate peak area, B is a carbonate peak area, C is an ether peak area, N is an alkylene oxide molar mass divided by (44 + an alkylene oxide molar mass), and the $CO_2$ content is (a carbonate unit mole fraction x 44) divided by [(the carbonate unit mole fraction x 44) + (an alkylene oxide molar mass x 100)].

*Organic acid*

According to an embodiment of the present invention, the organic acid serves to inactivate a catalyst, and may be included in the polyalkylenecarbonate resin composition in an amount of 0.001 parts by weight to less than 0.5 parts by weight with respect to 100 parts by weight of the polyalkylenecarbonate.

Specifically, the polyalkylenecarbonate resin composition may include 0.05 parts by weight to 0.1 parts by weight of the organic acid.

When the organic acid is included in the ranges above, the catalyst may be effectively inactivated without a problem of accelerating thermal decomposition of the polyalkylenecarbonate, and thermal stability of the composition may be effectively improved.

In addition, the organic acid may be at least any one selected from a citric acid, a tartaric acid, an ascorbic acid, and a maleic acid.

*Anti-oxidant*

According to an embodiment of the present invention, the anti-oxidant serves to remove a radical, and may be included in the polyalkylenecarbonate resin composition in an amount of 0.01 parts by weight to 3.00 parts by weight with respect to 100 parts by weight of the polyalkylenecarbonate.

Specifically, when the polyalkylenecarbonate resin composition includes the anti-oxidant, the anti-oxidant may be included in an amount of 0.05 parts by weight to 1.50 parts by weight.

When the anti-oxidant is included in the range above, molecular weight decrease caused by thermal decomposition of the polyalkylenecarbonate may be effectively prevented, and transparency deterioration may be suppressed.

In addition, the anti-oxidant may be used without special limitation as long as being commonly known in the art, but may be, for example, at least any one selected from tetrakis[methylene-3-(3,5-di-t-butyl-4-hydroxyphenyl)propionate] methane, triethyleneglycol-bis-3-(3-t-butyl-4-hydroxy-5-methylphenyl)propionate, thiodiethylenebis[3-(3,5-di-t-butyl-4-hydroxyphenyl)propionate], 1,2-bis(3,5-di-t-Butyl-4-hydroxyhydrocinnamoyl)hydrazine, octadecyl 3-(3,5-di-t-butyl-4-hydroxyphenyl)propionate, 1,3,5-tris(4-t-butyl-3-hydroxy-2,6-dimethylbenzyl)-1,3,5-triazine-2,4,6-(1H,3H,5H)-trione, 2,4-di-t-pentyl-6-1-(3,5-di-t-pentyl-2-hydroxyphenyl)ethyl)phenylacrylate, 1,3,5-trimethyl-2,4,6-tris(3,5-di-t-butyl-4-hydroxybenzyl)benzene, α-tocopherol, 2,6-di-t-butyl-p-cresol.

*Hydrolysis inhibitor*

According to an embodiment of the present invention, the hydrolysis inhibitor serves to prevent hydrolysis of the polyalkylenecarbonate by reacting with moisture, and may be included in the polyalkylenecarbonate resin composition in an amount of 0.01 parts by weight to 3.00 parts by weight with respect to 100 parts by weight of the polyalkylenecarbonate.

Specifically, when the hydrolysis inhibitor is included, the polyalkylenecarbonate resin composition may include 0.05 parts by weight to 1.50 parts by weight of the hydrolysis inhibitor.

When the hydrolysis inhibitor is included in the ranges above, hydrolysis caused by moisture may be suppressed to effectively prevent molecular weight decrease of the polyalkylenecarbonate and to suppress yellowing.

In addition, the hydrolysis inhibitor may be used without special limitation as long as being commonly known in the art, and may be, for example, a carbodiimide-based compound.

According to an embodiment of the present invention, the carbodiimide-based compound is a general term of a compound including a -N=C=N- unit within a molecule, and specifically, may include the -N=C=N- unit of 1 to 1000, 1 to 100, or 1 to 10.

According to another embodiment, the carbodiimide compound may be bis(2,6-diisopropylphenyl)carbodiimide or poly[1,3,5-triisopropylphenylene-2,4-carbodiimide].

*Polyalkylenecarbonate Resin Composition*

The polyalkylenecarbonate resin composition according to an embodiment of the present invention may have a molecular weight change rate, defined by Equation 1 below, equal to or less than 35%.

[Equation 1]

$$\text{Molecular weight change rate (\%)} = (|M_{W1} - M_{W2}| / M_{W1}) \times 100$$

In Equation 1, $M_{W1}$ is a weight average molecular weight of the polyalkylenecarbonate resin composition before heat treatment measured by gel chromatography, and $M_{W2}$ is a weight average molecular weight of the polyalkylenecarbonate resin composition after heat treatment at 180°C for 20 minutes measured by gel chromatography.

In addition, the polyalkylenecarbonate resin composition according to an embodiment of the present invention may further include a fatty acid metal salt having a carbon number of 13 to 21 as needed, and the polyalkylenecarbonate resin composition according to another embodiment of the inventive concept may further include 0.001 parts by weight to 3.000 parts by weight of a fatty acid metal salt having a carbon number of 13 to 21.

When the polyalkylenecarbonate resin composition includes the fatty acid metal salt, yellowing and molecular weight decrease may be prevented more effectively.

In addition, when the polyalkylenecarbonate resin composition according to an embodiment of the present invention further includes the fatty acid metal salt having a carbon number of 13 to 21, the organic acid and the fatty acid metal salt may have a weight ratio of 1:0.01 to 5, or 1: 0.5 to 2, and in this case, there are effects that yellowing of the polyalkylenecarbonate resin composition is improved, and molecular weight deterioration of the polyalkylenecarbonate resin composition is prevented.

In addition, the fatty acid metal salt having a carbon number of 13 to 21 may be a calcium salt of the fatty acid, and more specifically, may be calciumstearate, magnesiumstearate, or a combination thereof.

Meanwhile, the polyalkylenecarbonate resin composition according to an embodiment of the present invention may be prepared in a manufacturing method, to be described later, without a step in which an organic acid, an anti-oxidant, a hydrolysis inhibitor, and/or a fatty acid metal salt are/is added and then removed so that contents of the organic acid, the anti-oxidant, the hydrolysis inhibitor, and/or the fatty acid metal salt in the polyalkylenecarbonate resin composition may be the same as amounts thereof added in preparing the same.

According to another embodiment, the contents of the organic acid, the anti-oxidant, the hydrolysis inhibitor, and/or the fatty acid metal salt in the polyalkylenecarbonate resin composition according to the present invention may be confirmed through an ingredient quantitative analysis method generally known in the art, and a quantitative analyzer such as UPLC/MS/MS, HPLC/RI, UPLC-QTOF/MS may be exemplarily used.

In addition, there is no difference between the amount of the organic acid, the anti-oxidant, the hydrolysis inhibitor, and/or the fatty acid metal salt added in preparing the polyalkylenecarbonate resin composition and the content of the same analyzed using the quantitative analyzer, or the difference is within an error range (±10%).

Method for Preparing the Polyalkylenecarbonate Resin Composition

The present invention provides a method for preparing the polyalkylenecarbonate resin composition.

The method for preparing the polyalkylenecarbonate resin composition according to an embodiment of the present invention is characterized by including a step (S1) of preparing a polymer including polyalkylenecarbonate by polymerizing an alkylene oxide compound and carbon dioxide in a solvent in the presence of a catalyst, a step (S2) of adding, to the polymer, at least one additive selected from an organic acid, an anti-oxidant, and a hydrolysis inhibitor, and agitating, and a step (S3) of removing the solvent, wherein the organic acid is added in an amount equal to or more than 0.001 parts by weight and less than 0.5 parts by weight with respect to 100 parts by weight of a polyalkylenecarbonate solid content in the polymer. Here, the method for preparing according to an embodiment of the present invention does not

include an additional process for removing the catalyst, such as extraction, or precipitation after polymerization, and thus the polymer includes the catalyst.

Hereinafter, the method will be divided into steps and will be more specifically described.

*Step (S1)*

The step (S1) is a step of forming polyalkylenecarbonate and preparing a polymer including the same, and may be performed by polymerizing an alkylene oxide compound and carbon dioxide in a solvent in the presence of a catalyst.

The catalyst includes a double metal cyanide compound and a complexing agent, and the double metal cyanide compound and the complexing agent may be used without limitation as long as being general in the art.

Exemplarily, the double metal cyanide compound may be derived from a metal cyanide complex salt and a metal salt, and the metal cyanide complex salt may be aqueous. Specifically, the metal cyanide complex salt may be represented by Formula 10 below.

[Formula 10] $Y_aM'(CN)_b$

In Formula 10 above, M' may be at least any one selected from the group consisting of Fe(II), Fe(III), Co(II), Co(III), Cr(II), Cr(III), Mn(II), Mn(III), Ir(III), Ni(II), Rh(III), Ru(II), V(V), and V(IV), and preferably, may be at least any one selected from the group consisting of Co(II), Co(III), Fe(II), Fe(III), Cr(III), Ir(III), and Ni(II). Y is an alkali metal ion, or an alkaline earth metal ion. a is an integer of 1 to 4, b is an integer of 4 to 6, and a and b are selected such that the metal cyanide complex salt is electrically neutral.

According to another embodiment, the metal cyanide complex salt may be potassium hexacyanocobaltate(III), potassium hexacyanoferrate(II), potassium hexacyanoferrate(III), calcium hexacyanocobaltate(III) or lithium hexacyanoiridate(III), and preferably, may be potassium hexacyanocobaltate(III).

The metal salt may be aqueous. Specifically, the metal salt may be represented by Formula 11 below.

[Formula 11] $M(X)_n$

In Formula 11 above, M may be a transition metal, preferably, may be at least any one selected from the group consisting of Zn(II), Fe(II), Ni(II), Mn(II), Co(II), Sn(II), Pb(II), Fe(III), Mo(IV), Mo(VI), Al(III), V(V), V(IV), Sr(II), W(IV). W(VI), Cu(II) and Cr(III), and more preferably, may be at least any one selected from the group consisting of Zn(II), Fe(II), Co(II) and Ni(II). X is an anion selected from a halide, a hydroxide, a sulfate, a carbonate, a cyanate, an oxalate, a thiocyanate, an isocyanate, an isothiocyanate, a carboxylate, and a nitrate. n is a number satisfying a valence state of M.

According to another embodiment, the metal salt may be zinc (II) chloride, zinc (III) chloride, zinc bromide, zinc iodide, zinc acetate, zinc acetylacetonate, zinc benzoate, zinc nitrate, iron (II) sulfate, iron (II) bromide, cobalt chloride (II), cobalt thiocyanate (II), nickel (II) formate, nickel (II) nitrate and a mixture thereof, and preferably, may be zinc chloride (II), zinc chloride (III), zinc bromide or zinc iodide.

The catalyst according to the present invention may be represented by Formula 12 below.

[Formula 12] $M^2{}_p[M^1(CN)_6]q \cdot dM^2(Xr \cdot eL \cdot fH_2O$

In Formula 12 above, $M^1$ and $M^2$ are each independently a transition metal, X is an anion, and L is cyclobutanol, cyclopentanol, cyclohexanol, cycloheptanol, or cyclooctanol. p, q, d, r, e, and f are each independently an integer of 1 to 6.

More specifically, the catalyst according to the present invention may be represented by Formula 13 below.

[Formula 13] $Zn_3[Co(CN)_6]_2 \cdot gZnCl_2 \cdot hL \cdot iH_2O$

In Formula 13 above, L is cyclobutanol, cyclopentanol, cyclohexanol, cycloheptanol, or cyclooctanol, and g, h and i are each independently an integer of 1 to 6.

In addition, the complexing agent may be used without special limitation as long as being generally used in the art, but may be exemplarily at least any one selected from the group consisting of ethanol, isopropanol, normal butanol, isobutanol, sec-butanol, and tert-butanol.

According to another embodiment, the complexing agent may be a compound represented by Formula 9 below.

[Formula 9]

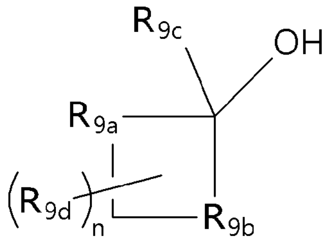

In Formula 9 above, $R_{9a}$ and $R_{9b}$ are each independently a single bond or an alkylene group having a carbon number of 1 to 5, and at least one of $R_{9a}$ and $R_{9b}$ is an alkylene group having a carbon number of 1 to 5,

$R_{9c}$ and $R_{9d}$ are each independently a hydrogen atom, or an alkyl group having a carbon number of 1 to 6, and n is an integer of 0 to 2.

Specifically, in Formula 9 above, $R_{9a}$ and $R_{9b}$ are each independently a single bond or an alkylene group having a carbon number of 1 to 3, at least one of $R_{9a}$ and $R_{9b}$ is an alkylene group having a carbon number of 1 to 3, $R_{9c}$ and $R_{9d}$ are each independently a hydrogen atom, or an alkyl group having a carbon number of 1 to 4, and n is an integer of 0 to 2.

According to another embodiment, in Formula 9 above, $R_{9a}$ and $R_{9b}$ are each independently a single bond or an alkylene group having a carbon number of 1 to 3, at least one of $R_{9a}$ and $R_{9b}$ may be an alkylene group having a carbon number of 1 to 3, $R_{9c}$ is a hydrogen atom, and n may be 0

According to another embodiment, the complexing agent may be a cycloalkyl alcohol having a carbon number of 3 to 12, and specifically, may be a cycloalkyl alcohol having a carbon number of 4 to 10, or 5 to 7.

More specifically, the complexing agent may be at least any one selected from the group consisting of cyclobutanol, cyclopentanol, cyclohexanol, cycloheptanol, cyclooctanol, 1-methyl cyclopentanol, 2-methyl cyclopentanol, 3-methyl cyclopentanol, 1-ethyl cyclopentanol, 2-ethyl cyclopentanol, 3-ethyl cyclopentanol, 1-propyl cyclopentanol, 2-propyl cyclopentanol, 3-propyl cyclopentanol, 1-butyl cyclopentanol, 2-butyl cyclopentanol, 3-butyl cyclopentanol, 1-isopropyl cyclopentanol, 2-isopropyl cyclopentanol, 3-isopropyl cyclopentanol, 1-(propan-2-yl) cyclopentanol, 2,2-dimethyl cyclopentanol, 2,3-dimethyl cyclopentanol, 3,3-dimethyl cyclopentanol, 1,2-dimethyl cyclopentanol, 1,3-dimethyl cyclopentanol, 1-methyl cyclohexanol, 1-ethyl cyclohexanol, 1-propyl cyclohexanol, 1-butyl cyclohexanol, 2-methyl-1-cyclohexanol, 2-ethyl-1-cyclohexanol, 3-ethyl-1-cyclohexanol, 4-ethyl-1-cyclohexanol, 2-propy-1-cyclohexanol, 3-propyl-1-cyclohexanol, 4-propyl-1-cyclohexanol, 2-butyl-1-cyclohexanol, 3-butyl-1-cyclohexanol, 4-butyl-1-cyclohexanol, 2-isopropyl-1-cyclohexanol, 3-isopropyl-1-cyclohexanol, 4-isopropyl-1-cyclohexanol, 2-tert-butyl-1-cyclohexanol, 3-tert-butyl-1-cyclohexanol, 4-tert-butyl-1-cyclohexanol, 2,3-dimethyl-1-cyclohexanol, 2,4-dimethyl-1-cyclohexanol, 3,4-dimethyl-1-cyclohexanol, 1-methyl cycloheptanol, 2-methyl cycloheptanol, 3-methyl cycloheptanol, and 4-methyl cycloheptanol. Specifically, the complexing agent may be at least any one selected from the group consisting of cyclobutanol, cyclopentanol, cyclohexanol, cycloheptanol, and cyclooctanol.

According to another embodiment, the complexing agent may be at least any one selected from the group consisting of cyclobutanol, cyclopentanol, cyclohexanol, cycloheptanol, and cyclooctanol.

Meanwhile, when a compound represented by Formula 9 is included in the catalyst as the complexing agent, a cycloalkane-type alcohol having a bulky structure may be used as the complexing agent so that the catalyst may have various crystal structures, for example, cubic, amorphous, monoclinic, and the like, and thus a ratio of a repeating unit including carbon dioxide in the polyalkylenecarbonate prepared by appropriately controlling a reaction rate of an epoxide compound and carbon dioxide may be increased and a content of a cyclic carbonate, which is a by-product, may be reduced, thereby obtaining the polyalkylenecarbonate with more excellent thermal stability and excellent processability.

In addition, the catalyst may further include a sub-complexing agent, the sub-complexing agent may be a compound having a hydroxy group, an amine group, an ester group, or an ether group at an end thereof.

The sub-complexing agent may improve activation of the catalyst, and may be, for example, at least any one selected from the group consisting of polyacrylamide, poly(acrylamide-co-acrylic acid), polyacrylic acid, poly(acrylic acid-co-maleic acid), polyacrylonitrile, polyalkyl acrylate, polyalkyl methacrylate, polyvinyl methyl ether, polyvinyl ethyl ether, polyvinyl acetate, polyvinyl alcohol, poly-N-vinylpyrrolidone, poly(N-vinylpyrrolidone-co-acrylic acid), polyvinyl methyl ketone, poly(4-vinylphenol), poly(acrylic acid-co-styrene), oxazoline polymer, polyalkyleneimine, maleic acid, maleic anhydride copolymer, hydroxyethylcellulose, polyacetal, glycidyl ether, glycoside, carboxylic acid ester of polyhydric alcohol, gallic acid, ester and amide.

In addition, the sub-complexing agent may be a compound prepared by ring-opening polymerization of a cyclic ether compound, an epoxy polymer, or an oxetane polymer, and may be, for example, at least any one selected from the

group consisting of polyether, polyester, polycarbonate, polyalkylene glycol, polyalkylene glycol sorbitan ester, and polyalkylene glycol glycidyl ether.

In addition, the polymerization is not specially limited, but preferably, may be performed as solution polymerization. The solution polymerization may appropriately control a reaction heat, and may easily control a weight average molecular weight or viscosity of the polyalkylenecarbonate to be obtained.

The catalyst and the alkylene oxide compound may be used in a weight ratio of 1:100 to 1:8000, 1:300 to 1:6000, or 1:1000 to 1:4000. In the ranges described above, there are effects that high activation of the catalyst may be exhibited and the by-product may be minimized, and a back-biting phenomenon of the prepared polyalkylenecarbonate caused by heating may be minimized.

In addition, polymerization of the alkylene oxide compound and carbon dioxide may be performed in a temperature range of 30°C to 120°C, 40°C to 110°C, or 50°C to 100°C. When the range described above is satisfied, polymerization time of the alkylene oxide compound and carbon dioxide may be controlled within 24 hours, thereby improving preparation productivity.

In addition, the polymerization of the alkylene oxide compound and carbon dioxide may be performed in a pressure range of 5 bar to 50 bar, 10 bar to 40 bar, or 15 bar to 30 bar. When the range described above is satisfied, there are effects that a ratio of the repeating unit including carbon dioxide is high in the prepared polyalkylenecarbonate, and a content of a cyclic carbonate, which is a by-product, is reduced.

The alkylene oxide compound may be at least any one selected from the group consisting of an alkylene oxide having a carbon number of 2 to 20 substituted or unsubstituted with halogen or an alkyl group having a carbon number of 1 to 5, a cycloalkylene oxide having a carbon number of 4 to 20 substituted or unsubstituted with halogen or an alkyl group having a carbon number of 1 to 5,and a styrene oxide having a carbon number of 8 to 20 substituted or unsubstituted with halogen or an alkyl group having a carbon number of 1 to 5, and may be, for example, at least any one compound selected from the group consisting of ethylene oxide, propylene oxide, butene oxide, pentene oxide, hexene oxide, octene oxide, decene oxide, dodecene oxide, tetradecene oxide, hexadecene oxide, octadecene oxide, butadiene monoxide, 1,2-epoxy-7-octene, epifluorohydrin, epichlorohydrin, epibromohydrin, isopropyl glycidyl ether, butyl glycidyl ether, t-butyl glycidyl ether, 2-ethylhexyl glycidyl ether, allyl glycidyl ether, cyclopentene oxide, cyclohexene oxide, cyclooctene oxide, cyclododecene oxide, alpha-pinene oxide, 2,3-epoxynorbornene, limonene oxide, dieldrin, 2,3-epoxypropylbenzene, styrene oxide, phenylpropylene oxide, stilbene oxide, chlorostilbene oxide, dichlorostilbene oxide, 1,2-epoxy-3-phenoxypropane, benzyloxymethyl oxirane, glycidyl-methylphenyl ether, chlorophenyl-2,3-epoxypropyl ether, epoxypropyl methoxyphenyl ether, biphenyl glycidyl ether and glycidyl naphthyl ether.

In addition, when the solution polymerization of the alkylene oxide compound and carbon dioxide is performed, the alkylene oxide compound and the solvent may be mixed, and the solvent may be at least any one selected from the group consisting of methylene chloride, ethylene dichloride, trichloroethane, tetrachloroethane, chloroform, acetonitrile, propionitrile, dimethylformamide, N-methyl-2-pyrrolidone, dimethyl sulfoxide, nitromethane, 1,3-dioxalane, 1,4-dioxane, hexane, toluene, tetrahydrofuran, methyl ethyl ketone, methylamine ketone, methyl isobutyl ketone, acetone, cyclohexanone, trichlorethylene, methyl acetate, vinyl acetate, ethyl acetate, propyl acetate, butyrolactone, caprolactone, nitropropane, benzene, styrene, xylene, and methyl propasol.

The solvent and the alkylene oxide compound may be used in a weight ratio of 1:0.1 to 1:100, 1:1 to 1:100, or 1:1 to 1:10. Since the solvent may be appropriately acted as a reaction medium in the range, there are effects that productivity of the polyalkylenecarbonate resin may be improved, and a byproduct generated in a preparation process may be minimized.

<u>Step (S2)</u>

The step (S2) is a step of adding at least one additive selected from an organic acid, an anti-oxidant, and a hydrolysis inhibitor to a polymer including the prepared polyalkylenecarbonate and agitating.

The organic acid may be added in an amount of 0.001 parts by weight or more and less than 0.5 parts by weight with respect to 100 parts by weight of a polyalkylenecarbonate solid content in the polymer, and a specific example of the organic acid is the same as what is described above.

In addition, the at least one additive selected from the anti-oxidant and the hydrolysis inhibitor may be added in an amount of 0.01 parts by weight or more and less than 3.00 parts by weight with respect to 100 parts by weight of the polyalkylenecarbonate solid content in the polymer, and specific examples of the anti-oxidant and the hydrolysis inhibitor are the same as what is described above.

As another embodiment, in the step (S2), a fatty acid metal salt having a carbon number of 13 to 21 may be further added to the polymer, and in this case, the fatty acid metal salt may be added in an amount of 0.001 parts by weight or more and less than 3.000 parts by weight with respect to 100 parts by weight of the polyalkylenecarbonate solid content in the polymer, and a specific example of the fatty acid metal salt is the same as what is described above.

In addition, the agitating may be performed without significant limitation as long as mixing to uniformly distribute

the organic acid in the polymer.

Meanwhile, before adding the organic acid, a step of additionally adding a solvent to the polymer such that the polyalkylenecarbonate sold content is 10 wt% to 40 wt% in the polymer may be further performed, and in this case, viscosity of the polymer may be reduced to more uniformly mix the organic acid in the polymer. In this case, the solvent may be the same as the solvent used in the step (S1), or may be at least any one selected from the solvents described above.

In addition, since the preparation method according to an embodiment of the present invention does not include an additional process such as extraction or precipitation for removing the catalyst component after polymerization, there are effects such as economic efficiency and productivity improvement due to a simple process and reduction of the cost for the additional process.

*Step (S3)*

The step (S3) is a step for preparing the polyalkylenecarbonate resin composition by removing the solvent.

Here, the solvent removal may be performed by a means general in the art without particular limitation as long as removing the solvent, and may be performed by adding heat, for example, at a temperature of 30°C to 150°C for 30 minutes to 10 hours.

## Examples

Hereinafter, the present invention will be described in more detail by Examples. However, Examples below will only exemplify the present invention, and a range of the present invention is not limited thereto.

## Preparation Example

A first mixed solution was prepared by mixing 11.45 g of zinc chloride, 30 ml of distilled water, and 39 g of cyclohexanol in a 500 ml beaker. A second mixed solution was prepared by dissolving 4 g of potassium hexacyanocobaltate in 100 ml of distilled water in a 250 ml beaker. A third mixed solution was prepared by dissolving 5 g of polypropylene glycol (Mw=3000) and 23 g of cyclohexanol in 2 ml of distilled water in a 100 ml beaker. The second mixed solution was added dropwise to the first mixed solution for 1 hour at 25°C using a mechanical agitator, and then the third mixed solution was added at once and reacted for 1 hour. Thereafter, the mixed product was separated using high-speed centrifugation, and the separated precipitate was cleaned twice using a mixture of 70 ml of distilled water and 70 ml of cyclohexanol. Thereafter, after additional cleaning using 140 ml of cyclohexanol, the cleaned precipitate was dried in a vacuum oven at 80°C for 12 hours to finally obtain 6.2 g of a double metal cyanide catalyst.

### Example 1

10 mg of the double metal cyanide catalyst prepared in Preparation Example, 20 g of ethylene oxide, and 10 g of dioxolane solvent were placed in a high-pressure reactor. Thereafter, carbon dioxide was added into the reactor, and the reactor was pressurized to 30 bar. A polymerization reaction was carried out at 70°C for 24 hours, and after completion of the reaction, unreacted carbon dioxide was removed and a polymer containing polyethylenecarbonate was prepared. Thereafter, the polymer was diluted with dioxolane solvent such that a polyethylenecarbonate solid content in the polymer reaches 20 wt%, and then 0.1 parts by weight of citric acid and 0.5 parts by weight of an anti-oxidant (SONGNOX®1010, SONGWON Inc.) were added to 100 parts by weight of the polyethylenecarbonate solid content, were agitated, were poured into a tray, and were dried in a vacuum oven at 40°C for 6 hours to prepare a polyethylenecarbonate resin composition. At this time, catalyst components remaining in the composition were Co=80 ppm and Zn=165 ppm.

### Example 2

In Example 1 above, a polyethylenecarbonate resin composition was prepared in the same manner as Example 1, except that SONGNOX®1035 (SONGWON Inc.) was added as an anti-oxidant in an amount of 0.5 parts by weight with respect to 100 parts by weight of a polyethylenecarbonate solid content. At this time, a catalyst component remaining in the composition was at the same level as Example 1.

### Example 3

In Example 1 above, a polyethylenecarbonate resin composition was prepared in the same manner as Example 1, except that SONGNOX®2450 (SONGWON Inc.) was added as an anti-oxidant in an amount of 0.5 parts by weight with respect to 100 parts by weight of a polyethylenecarbonate solid content. At this time, a catalyst component remaining in the

composition was at the same level as Example 1.

**Example 4**

In Example 1 above, a polyethylenecarbonate resin composition was prepared in the same manner as Example 1, except that SONGNOX®1024 (SONGWON Inc.) was added as an anti-oxidant in an amount of 0.5 parts by weight with respect to 100 parts by weight of a polyethylenecarbonate solid content. At this time, a catalyst component remaining in the composition was at the same level as Example 1.

**Example 5**

In Example 1 above, a polyethylenecarbonate resin composition was prepared in the same manner as Example 1, except that ZIKA-AHP213 (ZIKO Inc.) was added as a hydrolysis inhibitor, instead of an anti-oxidant, in an amount of 0.5 parts by weight with respect to 100 parts by weight of a polyethylenecarbonate solid content. At this time, a catalyst component remaining in the composition was at the same level as Example 1.

**Example 6**

In Example 3 above, a polyethylenecarbonate resin composition was prepared in the same manner as Example 3, except that ZIKA-AHP213 (ZIKO Inc.) was further added as a hydrolysis inhibitor in an amount of 0.5 parts by weight with respect to 100 parts by weight of a polyethylenecarbonate solid content. At this time, a catalyst component remaining in the composition was at the same level as Example 3.

**Example 7**

In Example 1 above, a polyethylenecarbonate resin composition was prepared in the same manner as Example 1, except that citric acid was added in an amount of 0.05 parts by weight with respect to 100 parts by weight of a polyethylenecarbonate solid content, and calciumstearate was further added in an amount of 0.05 parts by weight (citric acid:fatty acid metal salt=1:1 at a weight ratio) with respect to 100 parts by weight of a polyalkylenecarbonate solid content. At this time, a catalyst component remaining in the composition was at the same level as Example 1.

**Example 8**

In Example 1 above, a polyethylenecarbonate resin composition was prepared in the same manner as Example 1, except that citric acid was added in an amount of 0.3 parts by weight with respect to 100 parts by weight of a polyethylenecarbonate solid content. At this time, a catalyst component remaining in the composition was at the same level as Example 1.

**Example 9**

In Example 1 above, a polyethylenecarbonate resin composition was prepared in the same manner as Example 1, except that tartaric acid was added instead of citric acid in an amount of 0.05 parts by weight with respect to 100 parts by weight of a polyethylenecarbonate solid content. At this time, a catalyst component remaining in the composition was at the same level as Example 1.

**Example 10**

In Example 9 above, a polyethylenecarbonate resin composition was prepared in the same manner as Example 9, except that maleic acid was added instead of citric acid in an amount of 0.2 parts by weight with respect to 100 parts by weight of a polyethylenecarbonate solid content. At this time, a catalyst component remaining in the composition was at the same level as Example 9.

**Comparative Example 1**

In Example 1 above, a polyethylenecarbonate resin composition was prepared in the same manner as Example 1, except that an anti-oxidant was not added. At this time, a catalyst component remaining in the composition was at the same level as Example 1.

**Comparative Example 2**

In Example 1 above, a polyethylenecarbonate resin composition was prepared in the same manner as Example 1, except that citric acid was added in an amount of 0.5 parts by weight with respect to 100 parts by weight of a polyethylenecarbonate solid content. At this time, a catalyst component remaining in the composition was at the same level as Example 1.

**Comparative Example 3**

In Example 1 above, a polyethylenecarbonate resin composition was prepared in the same manner as Example 1, except that citric acid was added in an amount of 0.0005 parts by weight with respect to 100 parts by weight of a polyethylenecarbonate solid content. At this time, a catalyst component remaining in the composition was at the same level as Example 1.

**Experimental Example**

Molecular weight characteristics and thermal stability of the polyalkylenecarbonate resin composition prepared in the above Examples and Comparative Examples were compared and analyzed. A result is shown in Table 1 below and FIG. 1.

(1) Molecular weight characteristics

The molecular weight characteristics were analyzed by gel permeation chromatography (GPC) using polystyrene as a standard material.

Column: Two Agilent PLgel MIXED-B (7.5 mmx300, 10 μm)
Solvent: Chloroform
Flux: 0.7 ml/min
Column temperature: 40°C
Sample: Chloroform of 4.0 mg/1.0 ml
Sample injection volume: 20 μl
Standard material: polystyrene

In addition, the molecular weight characteristics were measured before and after heat-treatment of the polyalkylenecarbonate resin composition, and a molecular weight change rate was confirmed according to Equation 1 below.

[Equation 1]

$$\text{Molecular weight change rate (\%)} = (|M_{W1}-M_{W2}|/M_{W1}) \times 100$$

In Equation 1,
$M_{W1}$ is a weight average molecular weight of the polyalkylenecarbonate resin composition before heat treatment measured by gel chromatography, and $M_{W2}$ is a weight average molecular weight of the polyalkylenecarbonate resin composition after heat treatment at 180°C for 20 minutes measured by gel chromatography.

(2) Thermal stability

Mass change analysis was measured using a thermogravimetric analyzer (TGA), and a temperature at which 5% by weight mass loss occurred was recorded as a thermal decomposition temperature.
Specifically, the mass change analysis was measured using a thermogravimetric analyzer (TGA2, Mettler Toledo) under the following steps.

1) first step: increasing a temperature from 30°C to 150°C (10°C/min)

2) second step: maintaining at 150°C for 5 minutes

3) third step: reducing a temperature from 150°C to 30°C (10°C/min)

4) fourth step: maintaining at 30°C for 5 minutes

5) fifth step: increasing a temperature from 30°C to 400°C (10°C/min)

[Table 1]

| Classificat ion | GPC (Before heat treatment) | | | GPC (After heat treatment) | | | Molec ular weigh t chang e rate (%) | Ther mal deco mpos itio n temp erat ure (°C) |
|---|---|---|---|---|---|---|---|---|
| | Mw | Mn | PDI | Mw | Mn | PDI | | |
| Example 1 | 1890 36 | 7396 3 | 2.56 | 1316 59 | 6083 8 | 2.16 | 30 | 267 |
| Example 2 | 2029 39 | 7152 6 | 2.84 | 1490 26 | 6926 6 | 2.15 | 27 | 263 |
| Example 3 | 1944 07 | 8462 8 | 2.30 | 1357 21 | 6473 5 | 2.10 | 30 | 260 |
| Example 4 | 2037 96 | 6729 8 | 3.03 | 1412 52 | 6550 4 | 2.16 | 31 | 277 |
| Example 5 | 2026 33 | 8038 4 | 2.52 | 1564 10 | 7266 3 | 2.15 | 23 | 269 |
| Example 6 | 2013 08 | 8056 5 | 2.50 | 1753 75 | 7786 3 | 2.25 | 13 | 271 |
| Example 7 | 1993 59 | 8602 3 | 2.32 | 1546 98 | 7240 9 | 2.14 | 22 | 257 |
| Example 8 | 2389 47 | 1095 71 | 2.18 | 1602 01 | 7926 5 | 2.02 | 33 | 256 |
| Example 9 | 2459 53 | 1170 25 | 2.10 | 1655 37 | 8203 2 | 2.02 | 33 | 253 |
| Example 10 | 2411 82 | 1157 16 | 2.08 | 1674 11 | 7858 3 | 2.13 | 31 | 257 |
| Comparative Example 1 | 1951 82 | 7510 1 | 2.60 | 9734 2 | 4267 5 | 2.28 | 50 | 255 |
| Comparative Example 2 | 1891 32 | 7285 2 | 2.60 | 1047 96 | 5251 9 | 2.00 | 45 | 257 |
| Comparative Example 3 | 2037 08 | 7009 3 | 2.91 | 1215 20 | 6141 4 | 1.98 | 40 | 246 |

As shown in Table 1 above and FIG. 1, it is confirmed that the polyalkylenecarbonate resin compositions according to Examples 1 to 10 have molecular weight change rates of 35% or less, and have higher thermal decomposition temperatures, compared to Comparative Examples. Specifically, it is confirmed that the polyalkylenecarbonate resin compositions according to Examples 1 to 10 have the molecular weight change rates of 26% to 66% of that of the polyalkylenecarbonate resin composition according to Comparative Example 1 not including an additive (an anti-oxidant) to remarkably reduce the molecular weight change caused by heat treatment, and thus the polyalkylenecarbonate resin compositions according to the present invention include an organic acid and the additive to suppress the thermal decomposition and to significantly improve thermal stability.

In addition, it is confirmed that the polyalkylenecarbonate resin composition according to Comparative Example 2 including the organic acid, but exceeding an upper limit of an appropriate range of the organic acid proposed by the present invention has the molecular weight change rate of 45% so that an effect of suppressing polymer chain decomposition caused by heat is deteriorated, and the polyalkylenecarbonate resin composition according to Comparative Example 3 including less than a lower limit of the appropriate range of the organic acid has a molecular weight change rate of 40%, and a thermal decomposition temperature of 246°C to have a slight thermal decomposition suppression effect. Accordingly, it is confirmed that when the organic acid is included, but an amount of the organic acid is out of the range proposed by the present invention, the thermal decomposition is accelerated, or there is not a catalyst inactivation effect.

## Claims

1. A polyalkylenecarbonate resin composition comprising:

polyalkylenecarbonate;
an organic acid; and
at least one additive selected from an anti-oxidant and a hydrolysis inhibitor,
wherein the organic acid is included in an amount of 0.001 parts by weight or more and less than 0.5 parts by weight with respect to 100 parts by weight of the polyalkylenecarbonate.

**2.** The polyalkylenecarbonate resin composition of claim 1, wherein the organic acid is included in an amount of 0.05 parts by weight to 0.1 parts by weight with respect to 100 parts by weight of the polyalkylenecarbonate.

**3.** The polyalkylenecarbonate resin composition of claim 1, wherein the organic acid is at least any one selected from citric acid, tartaric acid, ascorbic acid, and maleic acid.

**4.** The polyalkylenecarbonate resin composition of claim 1, wherein at least one additive selected from an anti-oxidant and a hydrolysis inhibitor is included in an amount of 0.01 parts by weight to 3.00 parts by weight with respect to 100 parts by weight of the polyalkylenecarbonate.

**5.** The polyalkylenecarbonate resin composition of claim 1, wherein the anti-oxidant is at least any one selected from tetrakis[methylene-3-(3,5-di-t-butyl-4-hydroxyphenyl)propionate]methane, triethyleneglycol-bis-3-(3-t-butyl-4-hydroxy-5-methylphenyl)propionate, thiodiethylenebis[3-(3,5-di-t-butyl-4-hydroxyphenyl)propionate], 1,2-bis(3,5-di-t-Butyl-4-hydroxyhydrocinnamoyl)hydrazine, octadecyl 3-(3,5-di-t-butyl-4-hydroxyphenyl)propionate, 1,3,5-tris(4-t-butyl-3-hydroxy-2,6-dimethylbenzyl)-1,3,5-triazine-2,4,6-(1H,3H,5H)-trione, 2,4-di-t-pentyl-6-1-(3,5-di-t-pentyl-2-hydroxyphenyl)ethyl)phenylacrylate, 1,3,5-trimethyl-2,4,6-tris(3,5-di-t-butyl-4-hydroxybenzyl)benzene, α-tocopherol, and 2,6-di-t-butyl-p-cresol.

**6.** The polyalkylenecarbonate resin composition of claim 1, wherein the hydrolysis inhibitor is a carbodiimide-based compound.

**7.** The polyalkylenecarbonate resin composition of claim 1, further comprising a fatty acid metal salt having a carbon number of 13 to 21.

**8.** The polyalkylenecarbonate resin composition of claim 1, further comprising 0.001 parts by weight to 3.000 parts by weight of a fatty acid metal salt having a carbon number of 13 to 21.

**9.** The polyalkylenecarbonate resin composition of claim 1, wherein a molecular weight change rate defined by Equation 1 below is equal to or less than 35%.

[Equation 1]

$$\text{Molecular weight change rate (\%)} = (|M_{W1} - M_{W2}| / M_{W1}) \times 100$$

where $M_{W1}$ is a weight average molecular weight of the polyalkylenecarbonate resin composition before heat treatment measured by gel chromatography, and $M_{W2}$ is a weight average molecular weight of the polyalkylenecarbonate resin composition after heat treatment at 180°C for 20 minutes measured by gel chromatography.

**10.** The polyalkylenecarbonate resin composition of claim 1, wherein the polyalkylenecarbonate comprises a repeating unit represented by Formula 1 below, and a repeating unit represented by Formula 2 below.

[Formula 1]

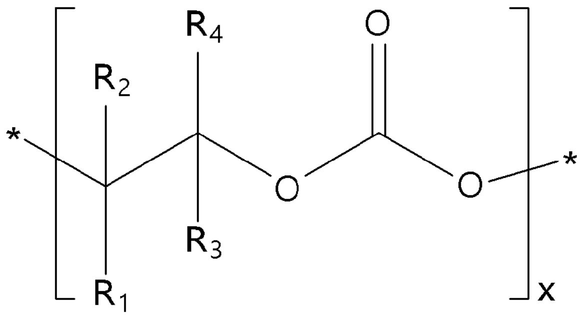

[Formula 2]

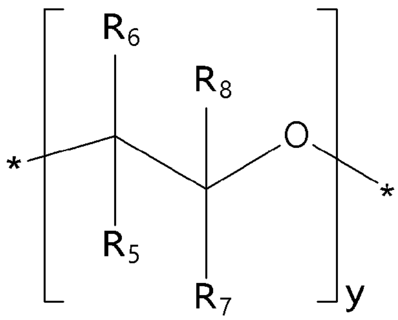

wherein $R_1$ to $R_8$ are each independently hydrogen, a linear alkyl group having a carbon number of 1 to 20, a branched alkyl group having a carbon number of 3 to 20, an aryl group having a carbon number of 6 to 20, an alkenyl group having a carbon number of 2 to 20, or a cycloalkyl group having a carbon number of 3 to 20, * means a connection site between repeating units, x and y are mole fractions, x is 0.70 to 1.00, y is 0.00 to 0.30, and x+y is 1.

**11.** The polyalkylenecarbonate resin composition of claim 1, wherein the polyalkylenecarbonate has a glass transition temperature of -10°C to 50°C.

**12.** The polyalkylenecarbonate resin composition of claim 1, wherein the polyalkylenecarbonate is at least any one selected from the group consisting of polyethylenecarbonate, polypropylenecarbonate, polypentenecarbonate, polyhexenecarbonate, polyoctenecarbonate and polycyclohexenecarbonate.

**13.** The polyalkylenecarbonate resin composition of claim 1, wherein the polyalkylenecarbonate has a cyclic carbonate content of 0.5% by weight to 15% by weight.

**14.** A method for preparing a polyalkylenecarbonate resin composition, the method comprising:

a step (S1) of preparing a polymer including polyalkylenecarbonate by polymerizing an alkylene oxide compound and carbon dioxide in a solvent in the presence of a catalyst;
a step (S2) of adding, to the polymer, at least one additive selected from an organic acid, an anti-oxidant, and a hydrolysis inhibitor, and agitating; and
a step (S3) of removing the solvent,
wherein the organic acid is added in an amount equal to or more than 0.001 parts by weight and less than 0.5 parts by weight with respect to 100 parts by weight of a polyalkylene carbonate solid content in the polymer.

**15.** The method of claim 14, wherein before adding the organic acid, a solvent is additionally added to the polymer such that a polyalkylenecarbonate solid content in the polymer is 10% by weight to 40% by weight.

**16.** The method of claim 14, wherein the polymerization is performed in a temperature range of 30°C to 120°C.

**17.** The method of claim 14, wherein in the step (S2), a fatty acid metal salt having a carbon number of 13 to 21 is further added to the polymer.

**18.** The method of claim 14, wherein the catalyst comprises a double metal cyanide compound and a complexing agent.

**19.** The method of claim 18, wherein the complexing agent is at least any one selected from the group consisting of cyclobutanol, cyclopentanol, cyclohexanol, cycloheptanol, cyclooctanol, 1-methyl cyclopentanol, 2-methyl cyclopentanol, 3-methyl cyclopentanol, 1-ethyl cyclopentanol, 2-ethyl cyclopentanol, 3-ethyl cyclopentanol, 1-propyl cyclopentanol, 2-propyl cyclopentanol, 3-propyl cyclopentanol, 1-butyl cyclopentanol, 2-butyl cyclopentanol, 3-butyl cyclopentanol, 1-isopropyl cyclopentanol, 2-isopropyl cyclopentanol, 3-isopropyl cyclopentanol, 1-(propan-2-yl) cyclopentanol, 2,2-dimethyl cyclopentanol, 2,3-dimethyl cyclopentanol, 3,3-dimethyl cyclopentanol, 1,2-dimethyl cyclopentanol, 1,3-dimethyl cyclopentanol, 1-methyl cyclohexanol, 1-ethyl cyclohexanol, 1-propyl cyclohexanol, 1-butyl cyclohexanol, 2-methyl-1-cyclohexanol, 2-ethyl-1-cyclohexanol, 3-ethyl-1-cyclohexanol, 4-ethyl-1-cyclohexanol, 2-propy-1-cyclohexanol, 3-propyl-1-cyclohexanol, 4-propyl-1-cyclohexanol, 2-butyl-1-cyclohexanol, 3-butyl-1-cyclohexanol, 4-butyl-1-cyclohexanol, 2-isopropyl-1-cyclohexanol, 3-isopropyl-1-cyclohexanol, 4-isopropyl-1-cyclohexanol, 2-tert-butyl-1-cyclohexanol, 3-tert-butyl-1-cyclohexanol, 4-tert-butyl-1-cyclohexanol, 2,3-dimethyl-1-cyclohexanol, 2,4-dimethyl-1-cyclohexanol, 3,4-dimethyl-1-cyclohexanol, 1-methyl cycloheptanol, 2-methyl cycloheptanol, 3-methyl cycloheptanol, and 4-methyl cycloheptanol.

[FIG. 1]

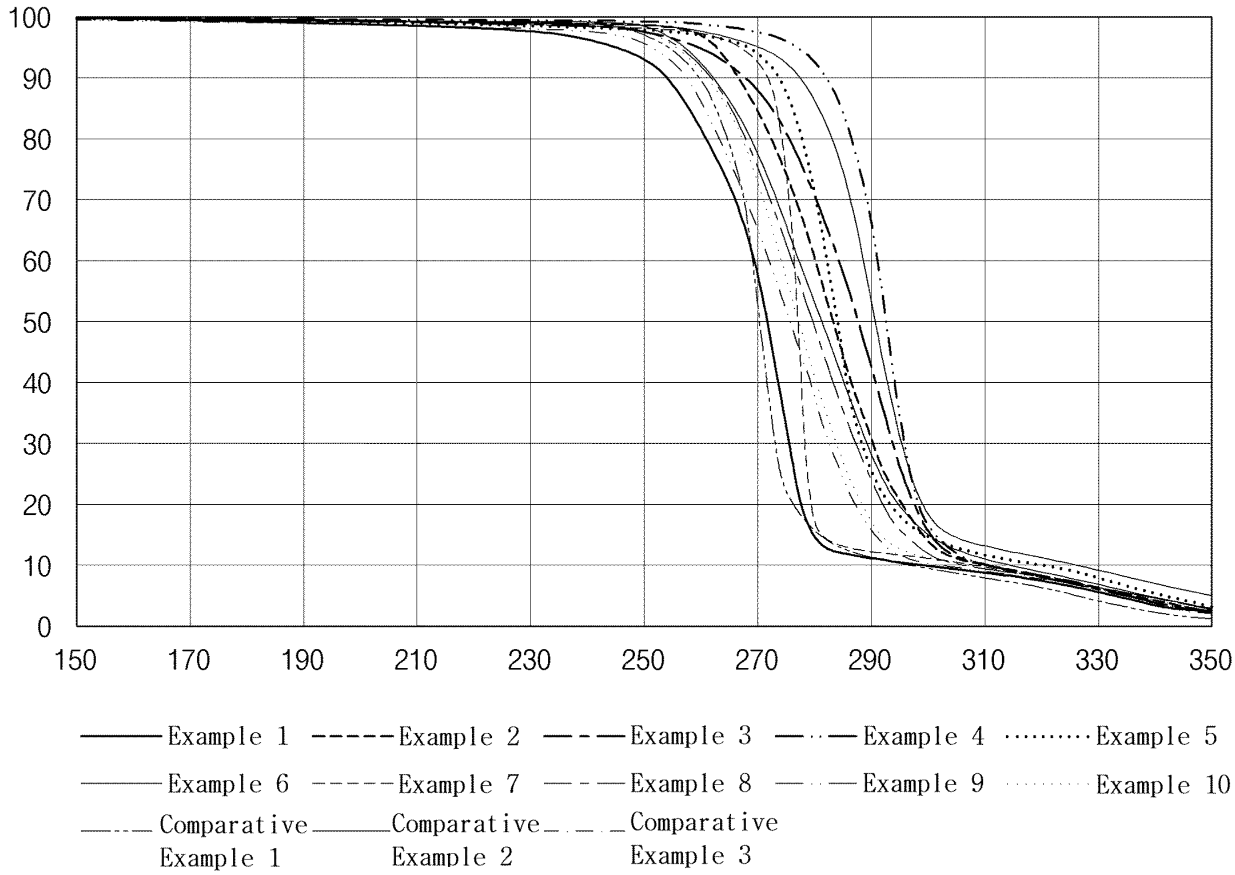
100
90
80
70
60
50
40
30
20
10
0
150
170
190
210
230
250
270
290
310
330
350
Example 1
Example 2
Example 3
Example 4
Example 5
Example 6
Example 7
Example 8
Example 9
Example 10
Comparative Example 1
Comparative Example 2
Comparative Example 3

## INTERNATIONAL SEARCH REPORT

International application No.
**PCT/KR2024/006387**

**A. CLASSIFICATION OF SUBJECT MATTER**

**C08K 5/09**(2006.01)i; **C08K 5/098**(2006.01)i; **C08K 5/29**(2006.01)i; **C08L 69/00**(2006.01)i; **C08G 64/34**(2006.01)i; **C08G 65/26**(2006.01)i

According to International Patent Classification (IPC) or to both national classification and IPC

**B. FIELDS SEARCHED**

Minimum documentation searched (classification system followed by classification symbols)

C08K 5/09(2006.01); C08G 63/08(2006.01); C08G 63/90(2006.01); C08G 64/02(2006.01); C08G 64/32(2006.01); C08K 5/13(2006.01); C08K 5/29(2006.01); C08L 69/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 유기산(organic acid), 촉매(catalyst), 비활성화(deactivation), 열분해(heat decomposition), 폴리알킬렌 카보네이트(polyalkylene carbonate)

**C. DOCUMENTS CONSIDERED TO BE RELEVANT**

| Category* | Citation of document, with indication, where appropriate, of the relevant passages | Relevant to claim No. |
|---|---|---|
| Y | BARRETO, C. et al. Novel solventless purification of poly(propylene carbonate): tailoring the composition and thermal properties of PPC. Polymer degradation and stability. 2012, vol. 97, pp. 893-904. See abstract; figure 1; and pages 893, 895-897 and 903. | 1-19 |
| Y | JP 11-263904 A (MITSUI CHEM. INC.) 28 September 1999 (1999-09-28) See claim 1; and paragraph [0018], example 6. | 1-5,7-19 |
| Y | KR 10-2005-0016159 A (NISSHINBO INDUSTRIES, INC.) 21 February 2005 (2005-02-21) See paragraphs [0004] and [0006]. | 1-4,6-19 |
| Y | YU, T. et al. Improving the Processability of Biodegradable Polymer by Stearate Additive. Journal of Applied Polymer Science. 2011, vol. 120, pp. 692-700. See abstract; and page 693. | 7,8,17 |
| Y | KR 10-2014-0084501 A (LOTTE CHEMICAL CORPORATION) 07 July 2014 (2014-07-07) See claims 1 and 7; and paragraphs [0042] and [0056]. | 18,19 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 August 2024** | **19 August 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2024/006387**

**C. DOCUMENTS CONSIDERED TO BE RELEVANT**

| Category* | Citation of document, with indication, where appropriate, of the relevant passages | Relevant to claim No. |
|---|---|---|
| A | JP 09-040766 A (TAKI CHEM. CO., LTD.) 10 February 1997 (1997-02-10) See paragraph [0013]. | 1-19 |
| A | LIU, Y. et al. Synthesis, characterization and hydrolysis of an aliphatic polycarbonate by terpolymerization of carbon dioxide, propylene oxide and maleic anhydride. Polymer. 2006, vol. 47, pp. 8453-8461. See abstract; and formula 1(a). | 1-19 |

Form PCT/ISA/210 (second sheet) (July 2022)

**INTERNATIONAL SEARCH REPORT**
**Information on patent family members**

International application No.
**PCT/KR2024/006387**

| Patent document cited in search report | Publication date (day/month/year) | Patent family member(s) | Publication date (day/month/year) |
|---|---|---|---|
| JP 11-263904 A | 28 September 1999 | None | |
| KR 10-2005-0016159 A | 21 February 2005 | CA 2476732 A1 | 07 February 2005 |
| | | CN 100338126 C | 19 September 2007 |
| | | CN 1590439 A | 09 March 2005 |
| | | DE 602004002350 T2 | 06 September 2007 |
| | | EP 1505110 A1 | 09 February 2005 |
| | | EP 1505110 B1 | 13 September 2006 |
| | | HK 1068507 A1 | 22 April 2005 |
| | | JP 2005-053870 A | 03 March 2005 |
| | | JP 4585749 B2 | 24 November 2010 |
| | | KR 10-1051708 B1 | 25 July 2011 |
| | | US 2005-0032947 A1 | 10 February 2005 |
| | | US 7368493 B2 | 06 May 2008 |
| KR 10-2014-0084501 A | 07 July 2014 | KR 10-1456758 B1 | 31 October 2014 |
| JP 09-040766 A | 10 February 1997 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230060435
- CN 103842406 B